**Europäisches Patentamt**

(19) **European Patent Office**

**Office européen des brevets**

(11) **EP 1 071 932 B1**

(12) **EUROPEAN PATENT SPECIFICATION**

(45) Date of publication and mention
of the grant of the patent:
**16.01.2002 Bulletin 2002/03**

(21) Application number: **99915784.5**

(22) Date of filing: **16.04.1999**

(51) Int Cl.⁷: $G01J\ 5/60$

(86) International application number:
**PCT/FI99/00311**

(87) International publication number:
**WO 99/54695 (28.10.1999 Gazette 1999/43)**

(54) **METHOD AND DEVICE FOR IMAGING MEASUREMENTS AND USE OF MEASURED INFORMATION IN PROCESS CONTROL**

VERFAHREN UND VORRICHTUNG FÜR BILDMESSUNGEN UND VERWENDUNG DIESER MESSWERTE ZUR VERFAHRENSTEUERUNG

PROCEDE ET DISPOSITIF DE MESURE PAR IMAGERIE, ET UTILISATION D'INFORMATIONS MESUREES POUR LA COMMANDE DE PROCESSUS

(84) Designated Contracting States:
**DE FR**

(30) Priority: **17.04.1998 FI 980850**

(43) Date of publication of application:
**31.01.2001 Bulletin 2001/05**

(73) Proprietor: **Oseir Oy**
**33720 Tampere (FI)**

(72) Inventors:
• **VATTULAINEN, Juha**
**FIN-36200 Kangasala (FI)**
• **TENHUNEN, Jussi**
**FIN-90570 Oulu (FI)**

(74) Representative: **Hakola, Unto Tapani**
**Tampereen Patenttitoimisto Oy, Hermiankatu 6**
**33720 Tampere (FI)**

(56) References cited:
**EP-A- 0 447 644      US-A- 4 413 324**
**US-A- 5 225 883**

**Description**

The object of the invention is a method for carrying out imaging measurements according to the preamble of claim 1.

The object of the invention is also an imaging measurement device as described in the preamble of claim 9.

The object of the invention is also the use of measured information in the control of the process as described in the preamble of claim 22.

It would be preferable for the research, control and monitoring of many technical processes to be able to measure different parameters of the process real-time in such a way that the measurement which is carried out disturbs the process under observation as little as possible. Passive optical measurement systems, which investigate electromagnetic radiation obtained from an object, are widely used just because of their ability to not to interrupt or disturb the process.

An example of an industrial process which benefits from the use of optical measurement devices, as compared to traditional measurement devices that are based on contact, is thermal spraying. Thermal spraying is a coating method that is widely used in industry. For example, blades of air plane turbines and rolls of paper machines are typically coated with thermal spraying. A great number of physical factors affect the coating result. Control and automatization of the spraying process require these factors to be understood and controlled better than they currently are. For this reason, the method is continuously under intensive research.

In the thermal spraying process, the coating material is melted into molten droplets which are accelerated into a high velocity and collided onto the surface of the object to be coated. As the particles hit the object to be coated, the molten droplets flatten on its surface and cool down to form thin lamellas. Deposition of lamellas forms the desired coating.

Optical pyrometry is a passive optical method with the help of which an object's temperature can be determined by the electromagnetic radiation it emits. Optical pyrometry is based on Planck's law of radiation

$$W(\lambda, \dot{T}) = \varepsilon C_1 \frac{1}{\lambda^S e^{\left(\frac{C_2}{\lambda T} - 1\right)}}$$

in which $W$ is the spectral radiation intensity emitted by the object, $\lambda$ the wavelength of electromagnetic radiation, $\varepsilon$ the emissivity of the target, $T$ the temperature of the target, and $C_1$ and $C_2$ are known constants. By measuring radiation intensity emitted by the object on a certain wavelength, it is possible to determine the object's temperature $T$. The most commonly used optical pyrometry is two colour pyrometry in which the relation of the radiation intensity emitted by the object on two known wavelength bandwidths is measured, in which case it is possible, with the help of Planck's law of radiation, to calculate the temperature of the object, if the relation of the object's emissivities on used wavelengths is known. Should it be desirable, more than two wavelength bandwidths can be used to determine the temperature.

Traditionally optical measurement devices have been used to perform point like measurements, in which the measurement is performed as an integrative measurement by analysing electromagnetic radiation obtained from a certain, typically small volume. In addition to the point-like measurements, there have also been imaging optical measurement methods , but their problem has typically been that their sensitivity is low, they are not real-time, as well as the complexity and expensiveness of the required optics.

Rapid development of information technology and detector technology, especially as concerns matrix detectors such as CDD-detectors, has, however, enabled increase of real-time imaging measurement systems with an acceptable sensitivity. The American patent publication US 5,225,883 presents one prior art real-time imaging measurement device based on a CCD-detector, with which imaging measurement device a two-dimensional temperature map of the object that is being imaged can be obtained.

Figure 1 presents the structure of an optical measurement device according to the patent publication US 5,225,883. In the solution the radiation obtained from the target 10 that is being imaged is divided with a beam splitter 11 into first and second part 12a and 12b, out of which the first part 12a is directed through the first filter 13a and imaging optics 14 to the camera's 17 detector 15, onto which the first image 16a of the target 10 is formed. The second part 12b of the radiation obtained from the target that is being imaged is directed via a mirror 18 and the second filter 13b to a means for compensating optical path 19 and further on through the optics 14 onto the detector 15 in which another image 16b of the target 10 is formed.

With the help of optical path compensation means 19 the difference in the optical paths between the first 12a and the second 12b part of the electromagnetic radiation is compensated in such a manner that as they arrive on the detector 15, both parts of the electromagnetic radiation 12a and 12b have travelled identical optical path lengths.

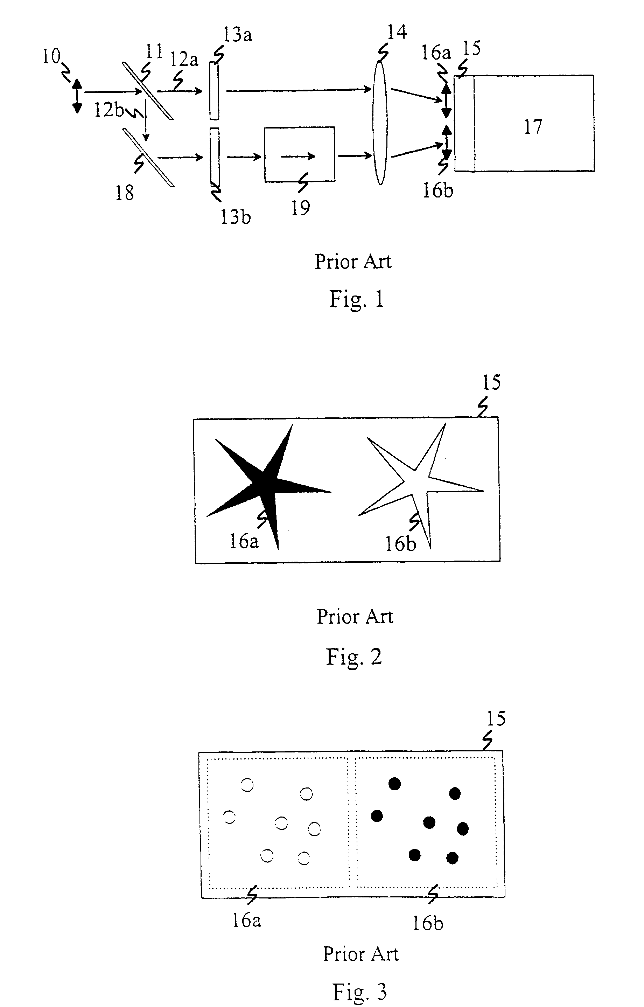

The first 12a and the second 12b part of electromagnetic radiation arriving on the detector are focused on the detector 15 so that, according to Figure 2, first 16a and second 16b image of the target 10 are formed on the detector 15. By choosing the filters 13a and 13b it is possible to affect which spectral bandwidths of electromagnetic radiation produce the first 16a and the second image 16b onto the detector 15. By choosing the spectral bands to be used in a known manner, it is possible to determine the temperature of the target that is being imaged with the help of two colour pyrometry, by comparing the characteristics of corresponding sections in the first 16a and the second 16b image, which have been formed on the detector 15.

One problem of the prior art are problems connected to aligning the optics. In solutions according to the prior art electromagnetic radiation obtained from the target 10 under study is divided with a beam splitter 11 into two parts 12a and 12b, which are directed, via their own, separate optical routes in a parallel manner onto the same detector 15. Both optical routes should be designed in such a manner that images 16a and 16b, formed of the parts of the electromagnetic radiation which arrive on the detector via separate routes, are formed on the detector side by side.

Optical design can be realised by placing on both optical routes their own optical components in order to focus the electromagnetic radiation on the detector, or by using the same optical components where is possible. By using on both optical routes separate optical components it is possible to attain the greatest flexibility, but the increase of the number of the components naturally increases also the construction expenses of the device. Correspondingly, the use of more than two spectral bands considerably complicates the situation.

By using the same optical components on both optical routes where possible, as in Figure 1, in which the same optical component 14 is used focusing both parts of electromagnetic radiation on the detector, the number of optical components used can be minimised. This, however, makes the design of the optics more demanding, as the optics has to function in a desired manner in both parts of the electromagnetic radiation arriving via separate routes.

Another problem of the prior art is the low use efficiency of the detector's surface area, since the size of the image of the target that is being imaged on the detector can in maximum be only half of the detector's surface area in order for both of the images to fit on the detector. The low use efficiency of the detector's surface area is especially highlighted in cases where the target that is being imaged consists of separate targets which fill the image area relatively loosely, like the small, individual targets shown in Figure 3. Such an image is typically formed, for example, in connection with imaging the molten droplets of thermal spraying. In a situation such as in Figure 3, a large part of the detector's 15 surface area is covered by the homogenous image obtained of the target's background.

The purpose of the invention is to eliminate the above mentioned problems related to the prior art by producing a new method in which the electromagnetic radiation obtained from the object is split at least into first and second part, which differ at least partially by their spectral bands, and which are focused onto the imaging detector so that at least the first and second image which are formed on the detector can be produced with a simpler and less expensive optical configuration compared to the prior art. Similarly, the invention aims at a more efficient use of detector's surface area.

The purpose of the invention is also to produce a new imaging measurement device which is, compared to the devices of the prior art, simpler as to its optics, and uses detector's surface area more efficiently. The device has an imaging detector as well as a means for separating electromagnetic radiation obtained from the target into at least first and second part, and also for focusing said at least first and second part onto the imaging detector so that at least the first and the second image of the object that is being imaged are formed on the detector.

Furthermore, the purpose of the invention is to produce a new way of using the information obtained from at least first and second image, formed on the imaging detector, in the monitoring and/or control of the process that is being imaged. This use aims at cheaper, simpler and more user-friendly ways to monitor and control the process, compared to the prior art solutions.

It is characteristic of the method according to the invention that said at least first and the second image are formed on the detector overlappingly in relation to each other. It is characteristic of the imaging measurement device according to the invention that the imaging measurement device has means for forming said at least the first and the second image overlappingly on the detector. It is characteristic of the use according to the invention that from said first and the second overlapping images, which are formed on the detector, corresponding targets are identified and by comparing the targets' characteristics, parameters essential to the monitoring and/or control of the process that is being imaged are calculated. Preferred embodiments have been presented in dependent claims.

The advantages of the method, the measurement device and the use according to the invention compared to the prior art are the cost savings made possible by the measurement device's simpler construction, tuning and use, due to the simpler optical design.

Furthermore, with the method and the measurement device according to the invention it is possible to take advantage, compared to the prior art, more efficiently of the total surface area of the detector.

In addition, with the use of information according to the invention more efficient monitoring and control of the process under investigation, as compared to the prior art, is attained.

In one embodiment of the method according to the invention the electromagnetic radiation obtained from the target is split into at least first and second part of electromagnetic radiation with the help of a dichroic mirror.

In another embodiment of the method according to the invention at least first and second parts of the electromagnetic radiation are moved in relation to each other with the same optical component that divides the electromagnetic radiation obtained from the target into at least first and second part.

In another embodiment of the method according to the invention at least one optical component is turned in order to move the target area which is being imaged.

In another embodiment of the method according to the invention from the first and the second image formed on the detector corresponding objects are identified.

In another embodiment of the method according to the invention the characteristics of the corresponding objects of the first and the second image are compared to each other.

In another embodiment of the method according to the invention, on the basis of the compared characteristics, the temperature of the target under observation is calculated with the help of two or multi-colour pyrometry.

In one embodiment of measurement device according to the invention at least one of said means is a dichroic mirror, whose substrate material can filter electromagnetic radiation in a desired manner.

In one embodiment of measurement device according to the invention there are turning means for turning at least one of said means, to which turning means several different optical components can be attached to such as, for example, a mirror that can simultaneously function on certain wavelength bands as an attenuating filter.

In one embodiment of the measurement device according to the invention the spectral bands to be separated are selected so that they are suited for two or multi-colour pyrometric temperature determination.

In one embodiment of measurement device according to the invention the imaging detector used is a CCD-detector.

In one embodiment of measurement device according to the invention there is a restriction element, such as a striped mask to restrict radiation from certain parts of the area under imaging from reaching the detector. Moving means can be attached to the restriction element in order to move the restriction element.

In one embodiment of measurement device according to the invention the measurement device comprises means for aligning the areas restricted by the restriction element in said first image with the unrestricted areas of said second image.

In one embodiment of the use according to the invention from at least first and second image formed overlappingly on the detector, corresponding targets are identified and by comparing the characteristics of the targets' parameters essential to the monitoring and/or control of the process under observation are calculated.

In one embodiment of the use according to the invention the process that is imaged is a thermal spraying process.

In one embodiment of the use according to the invention targets identified from at least the first and the second image can be perceived against a dark background as single targets that emit and/or scatter light.

In one embodiment of the use according to the invention the temperature of the targets is determined on the basis of the comparison of corresponding targets in at least first and second image.

The following describes the invention in detail by referring to the enclosed figures, of which

Figure 1 presents a real-time imaging measurement device for determining the temperature of the object under study as described in the prior art,

Figure 2 presents the first and the second image of a target under measurement, which are formed on the imaging detector of the measurement device as described in the prior art,

Figure 3 presents the first and the second image of another target under measurement, which are formed on the imaging detector of a measurement device as described in the prior art,

Figure 4 presents an arrangement according to the invention for carrying out an imaging measurement,

Figure 5 presents the use of a dichroic mirror for separating different spectral bands,

Figure 6 presents a solution according to the invention for carrying out an imaging measurement,

Figure 7 presents the first and the second image produced on the detector according to a solution in Figure 6, and

Figure 8 presents the use of a solution according to the invention in the control of a thermal spraying process.

Figures 1, 2 and 3 have been previously discussed in connection with the description of the prior art.

The Figures use same reference numbers and labelling for corresponding parts.

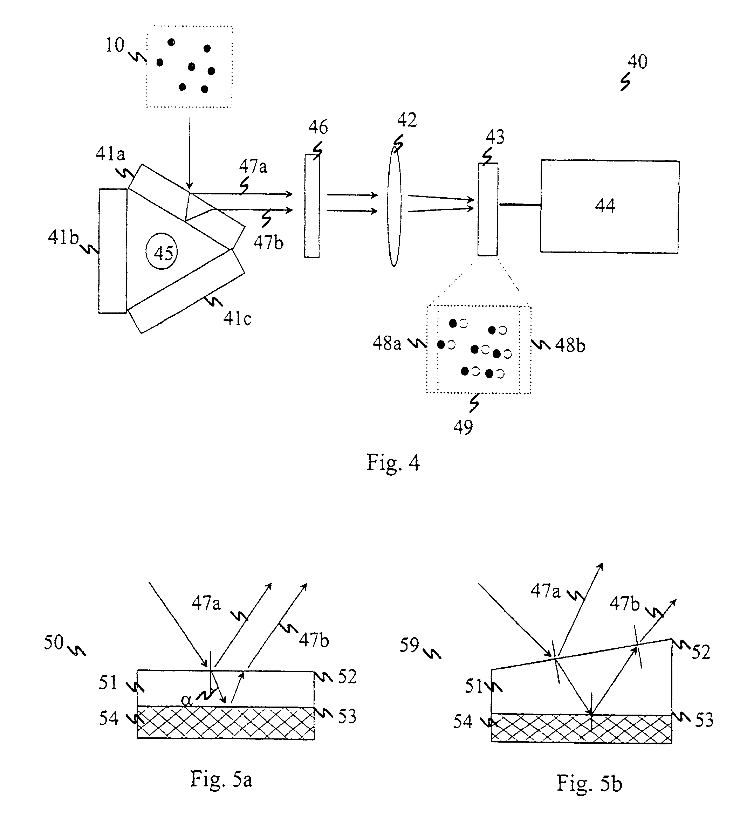

Figure 4 presents a measurement device 40 according to the invention. Measurement device 40 comprises the imaging detector 43 as well as means 41a; 41b; 41c, 42 for directing obtained electromagnetic radiation onto the imaging detector 43. Means in Figure 4 comprise imaging optics 42 and at least one optical component 41a; 41b; 41c. Furthermore, measurement device 40 in Figure 4 comprises also control and data processing means 44 in order to control the measurement device and to process measurement results obtained from the detector 43. The detector 43 can be, for example, a CCD camera, or more precisely, a CCD-detector included in the camera. In addition to these, the device 40 can also include, for example, turning means 45 and a filter 46.

Electromagnetic radiation obtained from the target 10 is split with an optical component 41a; 41b, 41c into first 47a and second 47b part, which differ at least partly by their spectral bands and which are focused with the help of imaging optics 42 onto the imaging detector 43.

It is essential to the invention that the first 48a and the second 48b image focused by the imaging optics 42 onto the detector 43 lie on the detector 43 overlappingly. Then the corresponding sections of the first image 48a and the second image 48b of the target that is being imaged are formed in different sections on the detector 43. If the target 10 that is being imaged consists of single targets, clearly distinctive from one another, so that the shift between the first 48a and the second 48b image is greater than the average diameter of the targets, a double image 49, as described in Figure 4, of the target 10 that is being imaged is formed onto the detector 43. Depending on the position of the target 10, the optical component 41a; 41b; 41c and the detector 43 in relation to one another, the shift in the double image can be horizontal to the detector 49, as presented in Figure 4, or the shift can also be perpendicular to the detector's horizontal axle, or in another angle which is suitable to the use of the application.

The solution according to the invention is not limited to the case in which single, corresponding targets in the first 48a and the second 48b image are not in contact with one another. In certain cases, for example if it is desired to facilitate the recognition of corresponding parts of a small single target created in a double image of the first 48a and the second image 48b out of a large number of similar images created by other targets, it is beneficial that these parts of a double image formed by the same target overlap partly. Similarly, should it be desired to investigate a collective signal of several spectral bands, it is beneficial that corresponding targets overlap, in which case it is possible, in the section of the overlapping, to measure the sum signal of the spectral bands.

When the shift between the first image 48a and the second image 48b in relation to one another is known, corresponding sections of the images can be recognised. By comparing the characteristics of these targets it is possible to draw conclusions of the characteristics of the target that is being imaged. For example, by choosing the spectral areas of the first 47a and the second 47b part in a known manner, it is possible to calculate the temperature of said section by comparing the corresponding sections in the first 48a and the second image 48b, with the help of two colour pyrometry, as described in the description of the prior art.

Figure 4 presents one solution according to the invention, in which electromagnetic radiation obtained from the target 10 is split, with the help of a dichroic mirror 41a, into first 47a and second 47b part, which differ at least partly by their spectral bands. Simultaneously, with the help of the dichroic mirror 41a, the first 47a and the second 47b part are moved in relation to one another so that the first 48a and the second image 48b which are formed on the detector 43 are overlapping in relation to one another.

The solution according to the invention is not, however, restricted to the use of a dichroic mirror, but it is also possible to use other optical configurations for splitting the obtained electromagnetic radiation into separate parts that differ at least partly by their spectral bands, and to focus these parts overlappingly onto the imaging detector. For example, it is possible to use the optical solution according to Figure 1 with the difference that the optics have been set to focus the images 16a and 16b, that are formed on the detector, overlappingly.

Figure 5a presents the principle of spectral separation and the shifting of parts of electromagnetic radiation in relation to one another with the help of a dichroic mirror 50. The surface coating 52 of the front surface of the mirror 50 reflects wavelengths that are longer than a set wavelength, but lets through wavelengths that are shorter than the minimum wavelength, which proceed onto the mirror material 51 and are refracted from the boundary surface in a known manner. Those wavelengths that have passed the front surface 52 are reflected from the surface coating of the back surface 53 in a known manner back towards the front surface 52 of dichroic mirror. It is possible, if desired, to affect the characteristics of the radiation that is reflected not only with the quality of the coating of the back surface 53 of the mirror, but also by placing behind the back surface 53 another optic material, the characteristics of which have been chosen in a known manner to produce the desired effect on the reflected part of the radiation.

That part of radiation which is reflected from the back surface 53 is refracted further on in a known manner from the front surface 52. A shift is formed between the parts 47a and 47b of radiation that are reflected from the front surface 52 and the back surface 53 of the dichroic mirror 50, which shift is dependent on the distance between the coatings, i.e., on the thickness of the substrate 51, as well as on the angle $\alpha$, in which the beam is refracted from the front surface 52. Refraction angle $\alpha$ is dependent on the angle of incidence and the index of refraction of the media in a known manner.

Further on, it is possible to affect the shift between the beams 47a and 47b by producing at least one of the reflecting surfaces 52 and 53 as slanted. Figure 5b presents a solution, in which the front surface 52 of the dichroic mirror 59 is slanted. Thus the directions of the beams reflected from the mirror differ from each other in a known manner. The difference to the planar dichroic mirror, shown in Figure 5a, is that the directions of the reflected beams are not parallel, which on one hand enables the production of larger deviations, but on the other hand makes the design of the optics more difficult.

By changing the characteristics of the surface coatings of the front and back surfaces 52 and 53 and also, if needed, by changing the mutual order of the coatings in respect to each other, it is possible to choose bandwidths corresponding to the images 48a and 48b that are formed on the detector 43 in a desired manner. It is possible to compensate the difference in optical distance that is formed between images 48a and 48b due to physical distance between coatings 52 and 53, i.e. due to the thickness of the mirror, so that the order of the coatings is chosen to annul the corresponding phenomenon that is caused by the chromaticity of imaging optics 42. Should the detector 43 or other optics not automatically limit suitable minimum and maximum wavelengths, it can, if needed, be done with a filter 46 drawn in Figure 4.

By choosing the material of the substrate 51 of the mirror suitably in order for it to attenuate (colour glass filter), or to filter in another manner, the wavelength that has transmitted the coating of the front surface 52, it is possible to adjust the mutual intensity of the measurement bands so that it suits the application and thus decreases the dynamic range that is required from the detector.

In the above-presented solution the dichroic mirror has only two reflecting surfaces, in which case the mirror divides the radiation hitting it into two parts. By using a dichroic mirror that has more coating layers it is easy to increase the number of reflecting surfaces and thus also the number of images, that have undergone spectral division, received on the detector 43, for example in order to conduct temperature determination with the help of three or multi-colour pyrometry.

In Figure 4 dichroic mirror 41a which functions as an optical component is attached to the turning means 45. With the help of the turning means 45 the optical component 41a; 41b; 41c can be turned so that the incidence direction of radiation that ends up on detector 43 is changed. This enables a wider inspection of the target under investigation than what would be possible with a fixed optical arrangement.

By attaching several different optical components 41a, 41b, 41c to the turning means 45 it is possible to change easily and rapidly the electromagnetic radiation received on the detector. It is possible to attach to the turning means 45 for example different dichroic mirrors for choosing different wavelength bands or a normal mirror for those measurements where spectral differentiation is not necessary or desirable. Furthermore, it is possible to attach to the turning means 45 for example a normal mirror made of coloured glass, which attenuates radiation coming from the target on a certain spectral band. Then, if so desired, it is possible to receive a normal image of the target, of which image certain, interfering spectral bands have been attenuated.

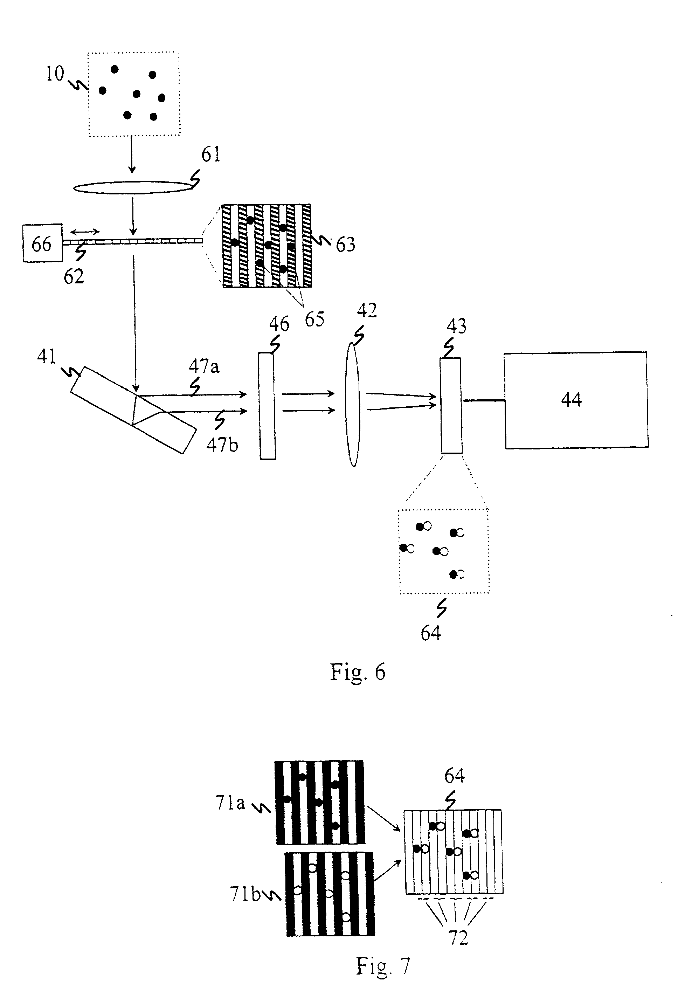

Figure 6 presents another embodiment according to the invention in which the radiation obtained from the target 10 is focused with the help of optics 61 on to the restriction element 62, onto which an image 63 of the imaged target is formed. Restriction element 62 limits certain areas, which in Figure 6 are marked with a hatching, out of the image 63 that is focused onto it, and thus electromagnetic radiation of targets 65 that are situated in these areas is restricted from reaching the optical element 41. The restriction element 62 can, for example, be a striped mask, as seen in Figure 6, but the design of the restriction element 62 can be altered to be best applicable for each application.

Radiation that has passed the restriction element 62 is directed onto an optical element 41 in which the radiation is split into first 47a and second 47b part, which differ at least partly by their spectral bands, which parts are then directed overlappingly onto the detector 43 as presented above, where they form a double image 64.

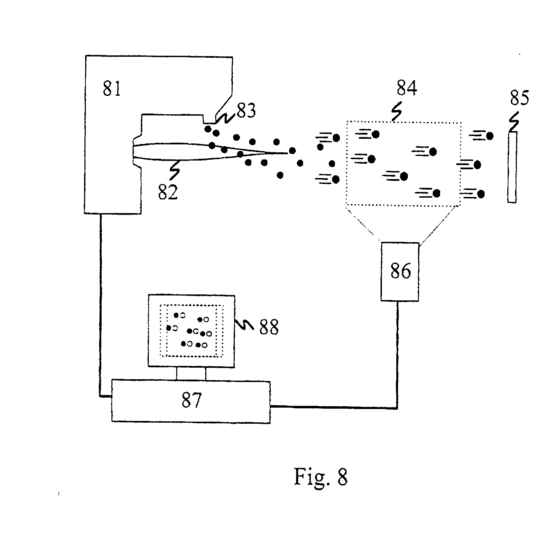

Figure 7 presents a preferred way to form a double image 64 when using a striped mask. It is preferrable to adjust the optics so that the first image 71a, formed on the detector 43 by the first part 47a of the radiation, and the second image 71b, formed on the detector 43 by the second part 47b of the radiation, are overlapping just enough to make the areas restricted by the mask 62 of the second image 71b, marked with a dark colour in Figure 7, hit the first image's 71a unrestricted areas, marked with a light colour in Figure 7, and vice versa. Then striped pairs 72 are formed on the double image 64, in which pairs images obtained from the same sections of the imaged target 10 from different spectral bands are side by side and thus easily identifiable.

The presented solution is not restricted only to the use of two wavelength bands. By dividing the radiation collected for example with the help of a multilayer dichroic mirror as previously described into several spectral bands and by designing the restriction element 62 correspondingly, it is possible to create images comprising several images, in which, instead of the striped pairs 72, there could be, for example, stripe groups consisting of three or four stripes.

With the help of the restriction element 62, the method according to the invention can be applied also when imaging targets that are reasonably large compared to the image area, or targets that contain otherwise large amounts of information, in which case, without the restricting element 62, it would be difficult to distinguish information conveyed by different images from overlapping images that are formed on the detector 43.

The problem with the use of the restriction element 62 is that it is not possible to perceive the whole target 10 that is being imaged in one go, since the restriction element 62 restricts the access of radiation from certain areas onto the detector 43. This problem can be diminished by connecting moving means 66 into the restriction element 62, with the help of which moving means the restriction element 62 can be moved in relation to other optical components. Then it is possible to first image the target under investigation with a certain image area and then change the place of the restriction element so that those parts of radiation that were in the first time cut off in the restriction element 62 can now enter the detector 43 and those parts of radiation that passed the restriction element 62 in the first time are now cut off in the restriction element 62.

Figure 8 presents a schematic drawing of the use of the solutions according to the invention for monitoring and controlling of thermal coating process. High local temperature and a high stream velocity of gas are created by the thermal spraying equipment 81. Coating material is fed onto the hot, streaming gas mixture, for example a plasma jet 82, from an outlet 83. Coating particles melt in the jet 83 and accelerate into a high velocity before hitting the target 85 to be coated.

The solution according to the invention can be used to image coating particles before they hit the target 85. For example, a measurement device 86 containing an optical configuration, as seen in Figure 4, is used to image the particles passing through the area 84. By choosing the right settings in the detector, the coating particles can be perceived as clear, single points against a dark background.

Double image, obtained by the measurement device, is conveyed to the data processing unit 87, in which a real-time image 88 of the process can be shown to the user. Furthermore, in the data processing unit 87 it is possible to calculate from the images obtained certain parameters, relevant to current application, such as average temperatures of the particles, on the basis of which temperatures the spraying equipment can be adjusted either automatically or to the user's judgement.

The invention is not limited only to the embodiments described above, but many changes are possible within the scope of the inventive idea as defined by the claims. For example, use according to the invention is not limited only to thermal spraying, but can be used for example for studying particles which are in different suspensions or for studying combustion processes.

The method of illuminating the targets under study is not essential to the invention, they can, for example, emit radiation themselves or refract radiation obtained from other sources.

**Claims**

1. A method for carrying out an imaging measurement, in which method electromagnetic radiation obtained from of target (10) is divided with at least one optical component (41a; 41b; 41c) into at least first (47a) and second (47b) parts that differ at least partly by their spectral bands, and said at least first (47a) and second parts (47b) are focused onto an imaging detector (43) so that said at least first (47a) and second parts (47b) produce at least first (48a) and second images (48b) of the target (10) on the detector (43), **characterised in that** said at least the first (48a) and the second images (48b) are formed substantially simultaneously onto the detector (43) overlappingly in relation to one another so that corresponding objects within the total imaged target area (10) which are included in the said at least first (48a) and second images(48b) appear on the detector (43) adjacently or partly overlapping.

2. Method according to claim 1, **characterised in that** electromagnetic radiation obtained from the target (10) is divided into at least first (47a) and second (47b) parts with a dichroic mirror (41a; 50; 59) having at least first (52) and second (53) reflective surfaces separated by thickness of the mirror substrate (51).

3. Method according to claim 1, **characterised in that** said at least first (47a) and second (47b) parts are moved in relation to one another so that said at least the first (48a) and the second (48b) images are formed onto the detector (43) overlappingly in relation to one another.

4. Method according to claim 3, **characterised in that** said at least first (47a) and second (47b) parts are moved in relation to one another with the same optical component (41a; 41b; 41c) that splits electromagnetic radiation obtained from the target (10) into said at least first (47a) and second (47b) parts.

5. Method according to claim 1, **characterised in that** at least one optical component (41a; 41b; 41c) is turned to move the target area (10) that is being imaged.

6. Method according to claim 1, **characterised in that** corresponding objects from at least the first (48a) and the second (48b) images that are formed onto the detector (43) are identified.

7. Method according to claim 6, **characterised in that** the characteristics of corresponding objects in at least the first (48a) and the second (48b) images that are formed onto the detector (43) are compared in relation to one another.

8. Method according to claim 7, **characterised in that**, on the basis of the compared characteristics, the temperature of the target (10) under study is calculated with the help of two or multi-colour pyrometry.

9. An imaging measurement device (40) having an imaging detector (43) as well as optical means (41a; 41b; 41c, 42) for splitting electromagnetic radiation obtained from the imaged target (10) into at least first (47a) and second (47b) parts that differ at least partly by their spectral bands and for focusing said at least first (47a) and second (47b) parts onto the detector (43) so that at least first (48a) and second (48b) images of the target (10) that is being imaged are formed onto the detector (43), **characterised in that** the measurement device (40) comprises means (41a; 41b; 41c, 42) for forming at least the said first (48a) and second (48b) images substantially simultaneously on the detector (43) overlappingly in relation to one another so that corresponding objects within the total imaged target area (10) which are included in the said at least first (48a) and second images(48b) appear on the detector (43) adjacently or partly overlapping.

10. Measurement device (40) according to claim 9, **characterised in that** at least one of said images forming means (41a; 41b; 41c, 42) is a dichroic mirror (41a; 50; 59) having at least first (52) and second (53) reflective surfaces separated by thickness of the mirror substrate (51).

11. Measurement device (40) according to claim 10, **characterised in that** the substrate material (51) of said dichroic mirror (41a; 50; 59) filters radiation in a desired manner.

12. Measurement device (40) according to claim 9, **characterised in that** the measurement device (40) has turning means (45) for turning at least one of the said images forming means (41a; 41b; 41c, 42).

13. Measurement device (40) according to claim 12, **characterised in that** several different optical components (41a; 41b; 41c) have been attached to the turning means (45).

14. Measurement device (40) according to claim 13, **characterised in that** at least a mirror having a single reflective surface has been attached to the turning means (45).

15. Measurement device according to claim 14, **characterised in that** substrate material (51) of the mirror attached to said turning means (45) filters electromagnetic radiation in a desired manner.

16. Measurement device (40) according to claim 9, **characterised in that** the spectral bands of said at least first (47a) and second (47b) part have been chosen so that they are suited for temperature determination with the help of two or multi-colour pyrometry.

17. Measurement device (40) according to claim 9, **characterised in that** the imaging detector (43) is a CCD-detector.

18. Measurement device (40) according to claim 9, **characterised in that** there is a restriction element (62) in the measurement device (40) to restrict access of electromagnetic radiation obtained from certain areas of the target (10) to the detector (43).

19. Measurement deidce (40) according to claim 18, **characterised in that** moving means (66) have been attached to the restriction element (62).

20. Measurement device (40) according to claim 18, **characterised in that** the restriction element (62) is a striped mask.

21. Measurement device according to claim 18, **characterised in that** it comprises means (41a; 41b; 41c; 42) for aligning areas of said first image which are restricted by the restriction element (62) with said second image's non-restricted areas.

22. The use of information obtained from at least first (48a) and second image (48b) with at least partly differing spectral bands, obtained onto the imaging detector (43) from the target (10,84) that is being measured, in the monitoring and/or control of the process that is being imaged, **characterised in that** from the said at least first (48a) and second (48b) images which are formed substantially simultaneously overlappingly on the detector (43) so that corresponding objects within the total imaged target area (10) which are included in the said at least first (48a) and second images (48b) appear on the detector (43) adjacently or partly overlapping, the said corresponding objects can be identified and, by comparing the characteristics of the objects, parameters that are relevant to the monitoring and/or control of the process that is being imaged are calculated.

23. Use according to claim 22, **characterised in that** the process is a thermal spraying process.

24. Use according to claim 22, **characterised in that** objects identifiable from said at least first (48a) and second (48b) images are perceived against a dark background as single targets emitting and/or scattering light.

25. Use according to claim 22, **characterised in that** on the basis of the comparison of corresponding objects in said at least first and second images the temperature of the targets is determined.

**Patentansprüche**

1. Verfahren zur Durchführung einer Bildmessung, wobei bei dem Verfahren von einem Meßobjekt (10) erhaltene elektromagnetische Strahlung mit zumindest einer optischen Komponente (41a; 41b; 41c) in zumindest erste (47a) und zweite (47b) Teile aufgeteilt werden, die sich zumindest teilweise in ihren Spektralbereichen unterscheiden und die zumindest ersten (47a) und zweiten Teile (47b) auf einem Bilddetektor (43) fokussiert sind, so dass die zumindest ersten (47a) und zweiten Teile (47b) zumindest erste (48a) und zweite Bilder (48b) des Meßobjektes (10) auf dem Detektor (43) erzeugen, **dadurch gekennzeichnet, dass** die zumindest ersten (48a) und zweiten Bilder (48b) im wesentlichen gleichzeitig auf dem Detektor (43) überlappend im Verhältnis zueinander abgebildet werden, so dass korrespondierende Objekte in der gesamt abgebildeten Meßobjektfläche (10), die in dem zumindest ersten (48a) und zweiten Bildern (48b) enthalten sind, auf dem Detektor (43) nebeneinander oder teilweise überlappend erscheinen.

2. Verfahren nach Anspruch 1, **dadurch gekennzeichnet, dass** die elektromagnetische Strahlung, die von dem Meßobjekt (10) erhalten wird, in zumindest erste (47a) und zweite (47b) Teile mit einem dichroitischen Spiegel (41a; 50; 59) aufgeteilt werden, mit zumindest ersten (52) und zweiten (53) reflektierenden Oberflächen, die durch die Dicke des Spiegelsubstrates (51) getrennt sind.

3. Verfahren nach Anspruch 1, **dadurch gekennzeichnet, dass** die zumindest ersten (47a) und zweiten (47b) Teile im Verhältnis zueinander bewegt werden, so dass die zumindest ersten (48a) und zweiten (48b) Bilder auf dem Detektor (43) übereinanderlappend im Verhältnis zueinander gebildet sind.

4. Verfahren nach Anspruch 3, **dadurch gekennzeichnet, dass** die zumindest ersten (47a) und zweiten (47b) Teile im Verhältnis zueinander durch die gleiche optische Komponente (41a; 41b; 41c) bewegt werden, die die von dem Meßobjekt (10) erhaltene elektromagnetische Strahlung in die zumindest ersten (47a) und zweiten (47b) Teile aufspaltet,

5. Verfahren nach Anspruch 1, **dadurch gekennzeichnet, dass** zumindest eine optische Komponente (41a; 41b; 41c) gedreht wird, um die Meßobjektfläche (10), die abgebildet wird, zu bewegen.

6. Verfahren nach Anspruch 1, **dadurch gekennzeichnet, dass** korrespondierende Objekte aus den zumindest ersten (48a) und zweiten (48b) Bildern, die auf dem Detektor (43) abgebildet sind, identifiziert werden.

7. Verfahren nach Anspruch 6, **dadurch gekennzeichnet, dass** die Merkmale der korrespondierenden Objekte in den zumindest ersten (48a) und zweiten (48b) Bildern, die auf dem Detektor (43) gebildet werden, im Verhältnis zueinander verglichen werden.

8. Verfahren nach Anspruch 7, **dadurch gekennzeichnet, dass,** auf der Basis der verglichenen Merkmale, die Temperatur des Meßobjektes (10), das untersucht wird, mit der Hilfe von Zwei- oder Vielfarbenpyrometrie errechnet wird.

9. Bildmessvorrichtung (40) mit sowohl einem Bilddetektor (43) als auch optischen Mitteln (41a; 42b; 41; 42) zum Aufteilen elektromagnetischer Strahlung, die von dem abgebildeten Meßobjekt (10) erhalten wird, in zumindest erste (47a) und zweite (47b) Teile, die sich zumindest teilweise in ihren Spektralbereichen unterscheiden und zur Fokussierung der zumindest ersten (47a) und zweiten (47b) Teile auf den Detektor (43), so dass zumindest erste (48a) und zweite (48b) Bilder des Meßobjektes (10), das abgebildet wird, auf dem Detektor (43) gebildet werden, **dadurch gekennzeichnet, dass** die Messvorrichtung (40) Mittel (41a; 41b; 41c; 42) zum Abbilden zumindest der ersten (48a) und zweiten (48b) Bilder im wesentlichen gleichzeitig auf dem Detektor (43) überlappend im Verhältnis zueinander umfasst, so dass korrespondierende Objekte innerhalb der gesamt abgebildeten Meßobjektfläche (10), die in dem zumindest ersten (48a) und zweiten Bildern (48b) enthalten sind, auf dem Detektor (43) nebeneinander oder teilweise überlappend erscheinen.

10. Messvorrichtung (40) nach Anspruch 9, **dadurch gekennzeichnet, dass** zumindest eines der bildformenden Mittel (41a; 41b; 41c, 42) ein dichroitischer Spiegel (41a; 50; 59) mit zumindest ersten (52) und zweiten (53) reflektierenden Oberflächen ist, die durch die Dicke des Spiegelsubstrates (51) getrennt sind.

11. Messvorrichtung (40) nach Anspruch 10, **dadurch gekennzeichnet, dass** das Substratmaterial (51) des dichroitischen Spiegels (41a; 50, 59) die Strahlung in einer gewünschten Art und Weise filtert.

12. Messvorrichtung (40) nach Anspruch 9, **dadurch gekennzeichnet, dass** die Messvorrichtung (40) Drehmittel (45) zum Drehen zumindest eines der bildformenden Mittel (41a; 41b; 41c; 42) aufweist.

13. Messvorrichtung (40) nach Anspruch 12, **dadurch gekennzeichnet, dass** mehrere verschiedene optische Komponenten (41a; 41b; 41c) an den Drehmitteln (45) angeordnet sind.

14. Messvorrichtung (40) nach Anspruch 13, **dadurch**

**gekennzeichnet, dass** zumindest ein Spiegel mit einer einfach reflektierenden Oberfläche an den Drehmitteln (45) angeordnet ist.

15. Messvorrichtung nach Anspruch 14, **dadurch gekennzeichnet, dass** das Substratmaterial (51) des Spiegels, der an den Drehmitteln (45) angeordnet ist, elektromagnetische Strahlung in einer gewünschten Art und Weise filtert.

16. Messvorrichtung (40) nach Anspruch 9, **dadurch gekennzeichnet, dass** die Spektralbereiche der zumindest ersten (47a) und zweiten (47b) Teile so ausgewählt wurden, dass sie zur Temperaturbestimmung mit Hilfe der Zwei- oder Vielfarbenpyrometrie geeignet sind.

17. Messvorrichtung (40) nach Anspruch 9, **dadurch gekennzeichnet, dass** der Bilddetektor (43) ein CCD-Detektor ist.

18. Messvorrichtung (40) nach Anspruch 9, **dadurch gekennzeichnet, dass** in der Messvorrichtung (40) ein Beschränkungselement (62) vorgesehen ist, um den Zugang elektromagnetischer Strahlung, die von bestimmten Flächen des Meßobjektes (10) erhalten wird, zu dem Detektor (43) zu beschränken.

19. Messvorrichtung (40) nach Anspruch 18, **dadurch gekennzeichnet, dass** Bewegungsmittel (66) an dem Beschränkungselement (62) angeordnet sind.

20. Messvorrichtung (40) nach Anspruch 18, **dadurch gekennzeichnet, dass** das Beschränkungselement (62) eine Streifenmaske ist.

21. Messvorrichtung nach Anspruch 18, **dadurch gekennzeichnet, dass** es Mittel (41a; 41b; 41c; 42) zum Ausrichten von Flächen des ersten Bildes, die durch das Beschränkungselement (62) beschränkt sind, mit den nicht beschränkten Flächen des zweiten Bildes aufweist.

22. Verwendung von Informationen, die von zumindest ersten (48a) und zweiten Bildern (48b) mit zumindest teilweise verschiedenen Spektralbereichen erhalten wurden, erhalten auf dem Bilddetektor (43) von dem Meßobjekt (10, 84), das bei der Überwachung und/oder Steuerung des Prozesses, der abgebildet wird, gemessen wird **dadurch gekennzeichnet, dass** von den zumindest ersten (48a) und zweiten (48b) Bildern, die im wesentlichen gleichzeitig, überlappend auf dem Detektor (43) gebildet sind, so dass korrespondierende Objekte innerhalb der gesamt abgebildeten Meßobjektfläche (10), die in den zumindest ersten (48a) und zweiten Bildern (48b) enthalten sind, auf dem Detektor (43) nebeneinander oder teilweise überlappend erscheinen, die korrespondierenden Objekte identifiziert werden können und dass Parameter, die für die Überwachung und/oder Steuerung des abgebildeten Prozesses relevant sind, durch Vergleichen der Merkmale der Objekte errechnet werden.

23. Verwendung nach Anspruch 22, **dadurch gekennzeichnet, dass** der Prozess ein thermischer Spritzprozess ist.

24. Verwendung nach Anspruch 22, **dadurch gekennzeichnet, dass** identifizierbare Objekte der zumindest ersten (48a) und zweiten (48b) Bilder gegen einen dunklen Hintergrund einfache Meßobjekte wahrgenommen werden, die Licht aussenden und/oder streuen.

25. Verwendung nach Anspruch 22, **dadurch gekennzeichnet, dass** auf der Basis des Vergleiches der korrespondierenden Objekte in den zumindest ersten und zweiten Bildern die Temperatur der Meßobjekte bestimmt wird.

**Revendications**

1. Procédé pour effectuer une mesure par imagerie, dans lequel le rayonnement électromagnétique obtenu à partir d'une cible (10) est divisé par au moins un composant optique (41a; 41b; 41c) en au moins des première (47a) et deuxième (47b) parties qui se distinguent au moins en partie par leurs bandes spectrales, et lesdites au moins première (47a) et deuxième (47b) parties sont focalisées sur un détecteur d'images (43) de sorte que lesdites au moins première (47a) et deuxième (47b) parties produisent au moins des première (48a) et deuxième (48b) images de la cible (10) sur le détecteur (43), **caractérisé en ce que** lesdites au moins première (48a) et deuxième (48b) images sont formées substantiellement en même temps sur le détecteur (43) avec un recouvrement mutuel de sorte que des objets correspondants à l'intérieur de toute la zone cible projetée (10), qui sont inclus sur lesdites au moins première (48a) et deuxième (48b) images, apparaissent sur le détecteur (43) de façon adjacente ou avec un recouvrement partiel.

2. Procédé selon la revendication 1, **caractérisé en ce que** ce rayonnement électromagnétique obtenu à partir de la cible (10) est divisé en au moins des première (47a) et deuxième (47b) parties par un miroir dichroïque (41a; 50; 59) ayant au moins des première (52) et deuxième (53) surfaces réfléchissantes séparées par l'épaisseur du substrat de miroir (51).

3. Procédé selon la revendication 1, **caractérisé en**

**ce que** lesdites au moins première (47a) et deuxième (47b) parties sont déplacées l'une par rapport à l'autre de sorte que lesdites au moins première (48a) et deuxième (48b) images sont formées sur le détecteur (43) avec un recouvrement mutuel.

4. Procédé selon la revendication 3, **caractérisé en ce que** lesdites au moins première (47a) et deuxième (47b) parties sont déplacées l'une par rapport à l'autre par le même composant optique (41a; 41b; 41c) qui divise le rayonnement électromagnétique obtenu à partir de la cible (10) en lesdites première (47a) et deuxième (47b) parties.

5. Procédé selon la revendication 1, **caractérisé en ce que** l'on fait tourner au moins un composant optique (41a; 41b; 41c) pour déplacer la zone cible (10) en cours de projection.

6. Procédé selon la revendication 1, **caractérisé en ce que** des objets correspondants provenant des au moins première (48a) et deuxième (48b) images, qui sont formés sur le détecteur (43), sont identifiés.

7. Procédé selon la revendication 6, **caractérisé en ce que** les caractéristiques d'objets correspondants sur au moins les première (48a) et deuxième (48b) images, qui sont formés sur le détecteur (43), sont comparés l'un à l'autre.

8. Procédé selon la revendication 7, **caractérisé en ce que**, sur la base des caractéristiques comparées, la température de la cible (10) examinée est calculée à l'aide de la pyrométrie à deux ou plusieurs couleurs.

9. Dispositif de mesure d'imagerie (40) ayant un détecteur d'images (43) ainsi que des moyens optiques (41a; 41b; 41c, 42) pour diviser le rayonnement électromagnétique obtenu à partir de la cible (10) projetée dans au moins des première (47a) et deuxième (47b) parties qui se distinguent au moins en partie par leurs bandes spectrales, et pour focaliser lesdites au moins première (47a) et deuxième (47b) parties sur le détecteur (43) de sorte qu'au moins des première (48a) et deuxième (48b) images de la cible (10), qui est en cours de projection, sont formées sur le détecteur (43), **caractérisé en ce que** le dispositif de mesure (40) comprend des moyens (41a; 41b; 41c, 42) pour former au moins lesdites première (48a) et deuxième (48b) images substantiellement en même temps sur le détecteur (43) avec un recouvrement mutuel de sorte que des objets correspondants à l'intérieur de la zone cible projetée totale (10), qui sont compris sur lesdites première (48a) et deuxième (48b) images, apparaissent sur le détecteur (43) de façon adjacente ou avec un recouvrement partiel.

10. Dispositif de mesure (40) selon la revendication 9, **caractérisé en ce qu'**au moins l'un desdits moyens de formation d'image (41a; 41b; 41c, 42) est un miroir dichroïque (41a; 50; 59) ayant au moins des première (52) et deuxième (53) surfaces réfléchissantes séparées par l'épaisseur du substrat de miroir (51).

11. Dispositif de mesure (40) selon la revendication 10, **caractérisé en ce que** la matière de substrat (51) dudit miroir dichroïque (41a; 50; 59) filtre le rayonnement d'une manière souhaitée.

12. Dispositif de mesure (40) selon la revendication 9, **caractérisé en ce que** le dispositif de mesure (40) dispose de moyens de rotation (45) pour faire tourner au moins l'un desdits moyens de formation d'image (41a; 41b; 41c, 42).

13. Dispositif de mesure (40) selon la revendication 12, **caractérisé en ce que** plusieurs composants optiques différents (41a; 41b; 41c) ont été reliés aux moyens de rotation (45).

14. Dispositif de mesure (40) selon la revendication 13, **caractérisé en ce qu'**au moins un miroir disposant d'une seule surface réfléchissante a été relié aux moyens de rotation (45).

15. Dispositif de mesure selon la revendication 14, **caractérisé en ce que** la matière de substrat (51) du miroir relié auxdits moyens de rotation (45) filtre le rayonnement électromagnétique d'une manière souhaitée.

16. Dispositif de mesure (40) selon la revendication 9, **caractérisé en ce que** les bandes spectrales desdites au moins première (47a) et (47b) parties ont été choisies de sorte qu'elles conviennent à la détermination de température à l'aide de la pyrométrie à deux ou plusieurs couleurs.

17. Dispositif de mesure (40) selon la revendication 9, **caractérisé en ce que** le détecteur d'images (43) est un détecteur à CCD.

18. Dispositif de mesure (40) selon la revendication 9, **caractérisé en ce qu'**il existe un élément de restriction (62) dans le dispositif de mesure (40) pour restreindre l'accès au détecteur (43) par le rayonnement électromagnétique obtenu à partir de certaines zones de la cible (10).

19. Dispositif de mesure (40) selon la revendication 18, **caractérisé en ce que** des moyens de déplacement (66) ont été reliés à l'élément de restriction (62).

**20.** Dispositif de mesure (40) selon la revendication 18, **caractérisé en ce que** l'élément de restriction (62) est un masque rayé.

**21.** Dispositif de mesure selon la revendication 18, **caractérisé en ce qu'**il comprend des moyens (41a; 41b; 41c; 42) pour aligner des zones de ladite première image qui sont restreintes par l'élément de restriction (62) sur des zones non restreintes de ladite deuxième image.

**22.** Utilisation d'informations obtenues à partir au moins de première (48a) et deuxième (48b) images avec des bandes spectrales au moins partiellement différentes, obtenues sur le détecteur d'images (43) à partir de la cible (10, 84) mesurée, au cours de la surveillance et/ou commande du processus en cours de projection, **caractérisée en ce qu'**à partir desdites au moins première (48a) et deuxième (48b) images qui sont formées substantiellement en même temps avec un recouvrement sur le détecteur (43) de sorte que des objets correspondants à l'intérieur de la zone cible projetée totale (10), qui sont compris sur lesdites au moins première (48a) et deuxième (48b) images, apparaissent sur le détecteur (43) de façon adjacente ou avec un recouvrement partiel, lesdits objets correspondants peuvent être identifiés et, en comparant les caractéristiques des objets, des paramètres sont calculés qui sont pertinents pour la surveillance et/ou la commande du processus en cours de projection.

**23.** Utilisation selon la revendication 22, **caractérisé en ce que** le processus est un processus de vaporisation thermique.

**24.** Utilisation selon la revendication 22, **caractérisé en ce que** les objets identifiables à partir desdites au moins première (48a) et deuxième (48b) images sont perçus sur un fond sombre comme des cibles individuelles émettant et/ou diffusant de la lumière.

**25.** Utilisation selon la revendication 22, **caractérisé en ce que** sur la base de la comparaison d'objets correspondants sur lesdites au moins première et deuxième images, la température des cibles est déterminée.

Prior Art

Fig. 1

Prior Art

Fig. 2

Prior Art

Fig. 3

Fig. 4

Fig. 5a

Fig. 5b

Fig. 6

Fig. 7

Fig. 8